# EUROPÄISCHE PATENTSCHRIFT

(11) **EP 2 187 146 B1**
(45) Veröffentlichungstag und Bekanntmachung des Hinweises auf die Patenterteilung: **02.01.2019**
(21) Anmeldenummer: 08019882.3
(22) Anmeldetag: 14.11.2008
(51) Int. Cl.: F24S 25/35, F24S 25/37, F24S 25/20, F24S 40/44, H02S 20/23

(54) **Traganordnung**
Support assembly
Agencement de support

(43) Veröffentlichungstag der Anmeldung: 19.05.2010
(73) Patentinhaber: Böcherer, Hans, 79348 Freiamt (DE)
(72) Erfinder: Koller, Alexander Dipl.-Ing., 79100 Freiburg (DE)
(74) Vertreter: Kunst, Manuel Nikolaus Johannes

(56) Entgegenhaltungen:
- EP-A- 0 905 795
- EP-A- 1 341 240
- WO-A-2004/079775
- DE-A1-102004 026 786
- DE-A1-102007 018 212
- DE-U1- 8 329 884
- US-A1- 2004 216 399
- US-A1- 2007 251 567

## Beschreibung

Die Erfindung betrifft eine Traganordnung zur Anbringung von Solarmodulen an einem Dach, einer Fläche oder dergleichen Tragwerkskonstruktion mit einem zwei verschiedene Längsseiten aufweisenden Tragprofil, über welches wenigstens zwei an seinen beiden verschiedenen Längsseiten anordenbare Solarmodule verbindbar sind, wobei die beiden Solarmodule in einer Ebene anordenbar sind, und wobei an dem Tragprofil an dessen einer Längsseite eine Aufnahme vorgesehen ist, in welcher ein freies Ende wenigstens eines ersten Solarmoduls aufnehmbar ist,
wobei die Traganordnung ein separates Profilelement aufweist, welches mit dem Tragprofil in einer Gebrauchsstellung schraubenlos verbindbar ist und in dieser mit einem Abschnitt des Tragprofils an dessen anderer Längsseite eine Aufnahme für ein freies Ende wenigstens eines zweiten Solarmoduls bildet und wobei der Abschnitt des Tragprofils als Profilstück vorgesehen ist, welches wenigstens eine dem zweiten Solarmodul zugewandte Flansch- und/oder Schenkelfläche aufweist, auf welcher das freie Ende dieses Solarmoduls direkt oder indirekt abgestützt auflegbar ist.

Eine Traganordnung ist beispielsweise aus der DE 10 2004 026 786 A1 bereits bekannt, bei welcher die Solarmodule in geschindelter Anordnung an der betreffenden Fläche verlegt sind.
Eine andere Traganordnung ist beispielsweise noch aus der WO 2004/079775 A2 bekannt, wobei bei dieser Traganordnung die Solarmodule zur einen Seite eines Tragprofils von der Aufnahme aufgenommen sind und ein zweites Solarmodul auf der anderen Seite des Tragprofils zunächst von einem separaten Klammerelement aufgenommen wird, welches seinerseits an dem Tragprofil abgestützt und aufwändig festgelegt werden muss. Diese Festlegung ist im Falle der Montage, bei Wartungsarbeiten oder sonstigen Gelegenheiten, zu welchen die unter den Solarmodulen befindliche Dachfläche zugänglich sein muss überdies nur mit größerem Aufwand wieder zu lösen und danach erneut herzustellen. Darüber hinaus weisen die aus dem Stand der Technik bekannten Traganordnungen einen treppenartigen Querschnitt auf, die Solarmodule sind also nicht in einer Ebene angeordnet. Im Übrigen sollen im Zusammenhang mit dieser Anmeldung unter dem Begriff "Solarmodule" sowohl gerahmte Module als auch ungerahmte Module, sogenannte Laminate, oder beispielsweise auch Solarkollektoren verstanden werden.

Es besteht demnach die Aufgabe, eine Traganordnung für Solarmodule zur Verfügung zu stellen, welche stabil ist, bei welcher die Module spannungsfrei befestigt werden können, und welche kostengünstig ein einfaches Verbinden mit den Solarmodulen und ein ebenso einfaches Lösen der Verbindung der Solarmodule mit der Traganordnung gestattet, so dass praktisch jederzeit auch einzelne Solarmodule ohne Demontage ganzer Modulreihen auswechselbar sind, wodurch ein einfache Wartung gestattet ist.

Diese Aufgabe wird gelöst durch eine Traganordnung der eingangs genannten Art, bei welcher das Profilelement als C- oder U-Profil mit Schenkeln gleicher oder unterschiedlicher Länge vorgesehen ist, welches in Gebrauchsstellung das freie Ende des zweiten Solarmoduls umgreift und dabei mit einem seiner Schenkel einen Flansch des Profilstücks derart hintergreift, dass der Schenkel des Profilelements mit dem Flansch des Profilstücks sowie einer dem Flansch benachbarten Fläche des Tragprofils zumindest bereichsweise eine formschlüssige Verbindung bildet.

Damit ist eine einfache Traganordnung gebildet, bei welcher beide Aufnahmen für die zwei an unterschiedlichen Seiten des Tragprofils angeordneten Solarmodule unter Zuhilfenahme des separaten Profilelements an dem Tragprofil selbst vorgesehen sind. Dies vereinfacht zum einen die Herstellung, da das Tragprofil nicht mit weiteren Stützeinrichtungen für ein Klammerelement oder dergleichen Haltemittel versehen sein muss und damit eine einfache Formgebung gestattet. Zum anderen ist die Anordnung des zweiten Solarmoduls ebenso wie seine eventuell notwendige Entfernung dadurch erleichtert, dass das zweite Profilelement selbst, etwa durch Eingehen einer Steckverbindung mit dem Tragprofil, in einfach handhabbarer Weise an der Traganordnung angebracht und gelöst werden kann. Unabhängig von der Schenkellänge der Schenkel des Profilstücks liegt der das Solarmodul umgreifende Schenkel dabei entweder direkt an einer Stirn- und/oder Seitenfläche des Solarmoduls an oder zwischen diesen ist noch ein in gewissen Grenzen flexibles Halteelement, etwa ein Gummistück, angeordnet. Hierbei wird eine sichere Verbindung zwischen dem zweiten Solarmodul und der durch das Profilelement und das Tragprofil gebildeten Aufnahme durch eine Ausführung der Traganordnung erreicht, bei der der Schenkel des Profilelements mit dem Tragprofil und dem Flansch zumindest bereichsweise eine formschlüssige Verbindung bildet. Dabei kann etwa der das Solarmodul-Ende und den Flansch des Profilstücks umgreifende Schenkel des Profilelement in eine durch den Flansch und eine Querstrebe des Tragprofils gebildete Aufnahme oder Vertiefung eingreifen, die so ausgebildet ist, dass sie für die beiden Flächen des Schenkels oder zumindest den überwiegenden Teil dieser Flächen allseitig einen Anschlag bildet. Hierdurch wird insbesondere auch eine spannungsfreie Halterung des Moduls erreicht.

In Längserstreckung des Tragprofils können zu dessen beiden Seiten jeweils weitere Solarmodule mit einem freien Ende in den jeweiligen Aufnahmen derart aufgenommen sein, dass die jeweils einer Seite des Tragprofils zugeordneten Solarmodule im Wesentlichen eine durchgehende Fläche bilden.

Bei einer zweckmäßigen Weiterbildung der Traganordnung kann ein Bereich des in Gebrauchsstellung des Profilelements dem zweiten Solarmodul abgewandten Fläche des Flanschs des Profilstücks zugewandten Schenkels des Profilelements und/oder der betreffende Flansch selbst einen sich ändernden Querschnitt, insbesondere eine Fase oder eine Rundung, aufweisen, so dass das Profilelement sich schnell und einfach mit dem Tragprofil verbinden lässt, weil der betreffende Schenkel des Profilstücks sich dann besonders leicht in eine durch Flansch und Tragprofil gebildete Aufnahme oder Vertiefung führen lässt.

Eine andere vorteilhafte Ausführung der Traganordnung ist an einer dem Tragprofil zugeordneten, im wesentlichen parallel zu der Dachfläche verlaufenden Querstrebe ein L-Profilstück angeordnet, welches einen von der Querstrebe weg weisenden Steg aufweist.

Ein erstes Solarmodul lässt sich mittels einer Ausführung der Traganordnung sicher an dem Dach, der Fläche oder Tragwerkskonstruktion anbringen und dort ortsfest halten, wenn an der ersten Aufnahme der Traganordnung durch einen insbesondere senkrecht von der durch die Traganordnung überdeckten Dachfläche wegweisenden Steg, der Teil eines L-Profils ist, ein stirnseitiger Anschlag für ein freies Ende des ersten Solarmoduls gebildet ist. Zwischen dem Solarmodul und dem Steg kann überdies aber auch noch ein Haltelement angeordnet sein, so dass das Modul nicht direkt an dem Steg anliegt.

Besonders vorteilhaft kann das erste Solarmodul hierbei im Bereich seines freien Endes durch direkte oder indirekte Anlage seiner Stirn-, Ober- und Unterseite an den jeweils gegenüberliegenden Flächen der Aufnahme sicher aufgenommen sein. Da Stege und Flansche von Teilprofilen des Tragprofil möglicherweise verschiedenen Funktionen dienen, können die entsprechenden Anlageflächen hierbei vorteilhaft mehreren Teilprofilen zugeordnet sein, weswegen die Ober- und die Unterseite des ersten Solarmoduls an den Flanschflächen zweier verschiedener Teilprofile des Tragprofils anliegen. Es ist aber auch möglich die erste Aufnahme aus einem einzigen Teilprofil des Tragprofils zu bilden.

Um bei gleichbleibend guter Verbindung von Tragprofil und Solarmodulen eine mechanische Beanspruchung der Komponenten der Traganordnung weitgehend zu reduzieren kann es bei einer vorteilhaften Weiterbildung der Traganordnung vorgesehen sein, dass zwischen dem L-Profil und dem ersten Solarmodul und/oder dem Profilelement und dem zweiten Solarmodul ein Halteelement angeordnet ist, welcher das Solarmodul an dem Tragprofil festlegt. Dieses Halteelement hält einerseits die Solarmodule in ihrer jeweiligen Aufnahme und Position, andererseits verhindert es Beschädigungen durch Reibung oder Kontakt. Das Halteelement kann zum Beispiel durch ein C-Profilstück aus Gummi gebildet sein.

Eine besonders sichere und haltbare Verbindung des Profilelements mit dem Flansch bzw. den Flanschen des T- oder L-profilartigen Profilstücks des Tragprofils, die insbesondere bei einer Befestigung der Traganordnung an geneigten oder senkrechten Fassadenflächen zweckmäßig einsetzbar ist, kann bei einer Weiterbildung der Traganordnung dadurch erreicht werden, dass zwischen den einander zugewandten Flächen des in Gebrauchsstellung befindlichen Profilelements und des Stegs wenigstens ein das Profilelement festlegendes Klemmstück angeordnet ist. Hierdurch wird das Profilelement in seiner Gebrauchsstellung mit umgriffenem zweiten Solarmodul klemmend festgelegt, kann jedoch nach Entfernen des Klemmstücks einfach wieder entfernt oder auch verschoben werden, so dass sich auch das zweite Solarmodul wieder von der Traganordnung lösen lässt. Das zwischen Steg und Profilelement angeordnete Klemmstück kann dabei beispielsweise als C-, U- oder H-förmiges Profilstück, aber auch aus Vollmaterial ausgebildet sein. Im Falle der Auslegung als C- oder U-Profil liegen die Schenkel des Profilstücks in Gebrauchsstellung bevorzugt an der jeweils benachbarten Fläche des Profilelements oder Stegs an. Es sind daneben aber auch andere Ausbildungen des Klemmstücks in unterschiedlichen geometrischen Formen denkbar.

Um nun wiederum das Klemmstück verliersicher an der Traganordnung in einer Art anzubringen, die auch mechanischen Belastungen standhält, ist an wenigstens einer der in Gebrauchsstellung des Profilelements einander zugewandten Flächen des Stegs des Tragprofils und des Profilelements als Sicherungsmittel ein Klemm-, Rast- und/oder Haltemittel vorgesehen, welches das Klemmstück in seiner Gebrauchsstellung hält. In einer besonders vorteilhaften, weil einfach zu realisierenden Ausbildung der Traganordnung ist dabei das Klemmstück durch wenigstens eine, insbesondere durch je eine sich längs der einander zugewandten Flächen des Stegs des Tragprofils oder/und des Profilelements erstreckende, mit der oder den Stirnseiten der Schenkel des profilartigen Klemmstücks verrastende Rastnase in seiner Gebrauchsstellung gehalten. Von den Flächen des Stegs und/oder des Profilelements steht dabei eine Rastnase vor mit der die nach oben weisenden Flächen der Schenkel des Klemmstücks durch hinunterdrücken desselben verrastet werden. Durch eine gewisse Flexibilität der Schenkel des Klemmstücks kann dieses trotz eines guten Halteergebnisses leicht wieder aus seiner Position entfernt werden, so dass daraufhin eine ebenso einfache Verschiebung oder Entfernung des Profilelements und nachfolgend eine Lösung der Verbindung des zweiten Solarmoduls von dem Tragprofil möglich ist.

Eine andere vorteilhafte Weiterbildung der erfindungsgemäßen Traganordnung kann darin bestehen, dass entlang der Längserstreckung des Tragprofils an dessen beiden Längsseiten jeweils mindestens zwei Solarmodule angeordnet sind und dass in den Bereichen aneinandergrenzender Solarmodule der gleichen Längsseite des Tragprofils zwischen deren dem Tragprofil zugeordneter Auflagefläche und den Solarmodulen ein im wesentlichen senkrecht zur Längserstreckung des Tragprofils verlaufendes Stützelement angeordnet ist. Dies führt zum einen dazu, dass das Solarmodul an dessen Auflagepunkt, -linie oder - fläche nicht direkt mit dem Tragprofil in Kontakt und so mechanische Einflüsse vermieden werden. Zum anderen kann das unter dem Bereich, in welchem zwei der gleichen Seite des Tragprofils zugeordnete Solarmodule aneinandergrenzen, verlaufende Stützelement, die zwischen den Solarmodulen befindliche Lücke schließen und derart beispielsweise Flüssigkeiten, mit welchen die Oberfläche beaufschlagt wird, abführen.

Bei einer zweckmäßigen Weiterbildung kann das betreffende Stützelement als nach oben offenes, insbesondere C- oder U-förmiges Profilstück ausgebildet sein, auf dessen beiden der Dachfläche abgewandten Flansch- bzw. Stirnflächen seitliche Randbereiche verschiedener Solarmodule der gleichen Seite des Tragprofils aufliegen.

Für eine Ausbildung der Traganordnung, bei welcher gerahmte Solarmodule eingesetzt werden kann eine andere Weiterbildung der Traganordnung darin bestehen, dass die Basis des profilartigen Stützelements als Standfläche für durch Profile gebildete Rahmen von Solarmodulen vorgesehen ist. Der jeweilige Rahmen des oder der Solarmodule kann dabei beispielsweise durch ein L-Profil gebildet sein, an dessen einem Stegende das Solarmodul angeordnet ist, und an dessen anderem Stegende sich ein Flansch befindet der auf der Basisfläche des Stützelements aufgelagert ist.

Als Oberfläche eines Daches oder zumindest dessen Überdeckung ist die erfindungsgemäße Traganordnung unterschiedlichen Witterungseinflüssen und damit natürlich auch Niederschlägen ausgesetzt. Daher ist bei einer bevorzugten Weiterbildung der Traganordnung durch die die Solarmodule abstützenden Teilprofile des Tragprofils zumindest unterhalb der ersten Aufnahme, bevorzugt unter beiden Aufnahmen, jeweils ein sich über die Länge des Tragprofils erstreckender Hohlraum gebildet, der flüssige oder rieselfähige über die Moduloberflächen und/oder die Stützelemente zugeleitete Medien, also etwa Regen oder geschmolzenen Schnee, aber auch beispielsweise Reinigungsflüssigkeiten, Sand oder dergleichen Medien, in Richtung der Breitseiten des Tragprofils dorthin abführt, wo sie anschließend aufgefangen, weitergeleitet oder verwertet werden können. In einer besonders bevorzugten Ausführungsform der Traganordnung bildet daher das Tragprofil mit dem Profilelement, den Solarmodulen und den Stützelementen für die überdeckte Dachfläche eine dichte Dachhaut. Hierbei kann also die Traganordnung nicht nur eine an sich vorhandene Dachfläche überdecken, sondern diese in ihrer gegenüber dem Dachstuhl abdichtenden Form, auf die Tragwerkskonstruktion aufgesetzt, sogar ersetzen. Hierfür können insbesondere zur Verbindung von auf der gleichen Längsseite eines Tragprofils angeordneten Solarmodulen zusätzliche Verbindungs- und/oder Dichtmittel vorgesehen sein.

Die Wartung der Traganordnung kann ebenso wie eventuell anfallende Reinigungsarbeiten durch eine Weiterbildung der Traganordnung vereinfacht werden, bei der in Verlängerung des Stegs von der überdeckten Dachfläche wegweisend eine sich entlang des Tragprofils erstreckende Führungseinrichtung, insbesondere zur Führung einer beweglichen Wagenanordnung, vorgesehen ist. Die Führungseinrichtung kann etwa aus einem in dem oberen Bereich der Traganordnung befindlichen Bereich vorgesehenen, speziellen Profil gebildet sein, in welches sich die betreffende Wagenanordnung einhängen lässt. Das Profil kann dabei im Querschnitt im wesentlichen kreisförmig oder in Art eines Hakens ausgebildet sein und erstreckt entlang der Längserstreckung des Tragprofils.

Eine flexible Anordnung der Traganordnung auf im Grunde beliebigen Dachflächen wird durch eine Ausführungsform erleichtert, bei welcher das Tragprofil an einem mit der Dachkonstruktion verbundenen Gestell angeordnet ist. Nach Befestigung des Gestells kann die Traganordnung dann anschließend auf das Dach aufgebracht werden. Hierdurch kann unter anderem die Erstmontage wegen geringerer Lasten erleichtert werden, zum anderen ist auch die gesamte Traganordnung einfacher austauschbar. In einer bevorzugten Ausführung der Traganordnung kann das Tragprofil mit dem Gestell beispielsweise einstückig ausgebildet sein, insbesondere als ein oder mehrere dem Tragprofil zugeordnete Profilstücke.

Die erfindungsgemäße Traganordnung ist an einem Schrägdach dann besonders zweckmäßig einsetzbar, wenn bei Anordnung an einer geneigten Dachfläche die erste Aufnahme des Tragprofils die untere Aufnahme eines bezüglich des zweiten Solarmoduls höher liegenden ersten Solarmoduls bildet. Bei Anbringung mehrerer derartiger Traganordnungen an der geneigten Dachfläche entsprechender Größe könnte' hierbei beispielsweise immer die zweite Aufnahme die obere Aufnahme eines Solarmoduls bilden.

Die Erfindung wird nachstehend anhand von Ausführungsbeispielen in der Zeichnung näher erläutert. Dabei zeigen in teilweise schematisierter Darstellung die
- Fig.1: eine perspektivische Seitenansicht einer ersten Ausführungsform von Einzelteilen der Traganordnung ohne Solarmodule;
- Fig.2: eine geschnittene Seitenansicht der einer weiteren Ausführungsform der Traganordnung mit an dem Tragprofil angeordneten, laminatartigen Solarmodulen sowie dem Profilelement und dem Klemmstück in Gebrauchsstellung;
- Fig.3: eine teilweise geschnittene, ebene Draufsicht von oben auf die Traganordnung der Fig.2;
- Fig.4: eine geschnittene Seitenansicht der Traganordnung aus den Fig. 2 und 3 entlang der Schnittlinie IV-IV;
- Fig.5: eine andere Ausführungsform der Traganordnung mit eine an der Schieneneinrichtung angeordnetem Servicewagen;
- Fig.6: eine geschnittene Ansicht einer eines Uförmigen Stützelements der Traganordnung, in welchem Rahmen von Solarmodulen abgestützt sind;
- Fig.7,8: eine Seitenansicht eines Ausschnitts einer weiteren Ausführungsform der Traganordnung, bei welcher das Profilelement ohne Klemmstück an dem Tragprofil gehalten ist.

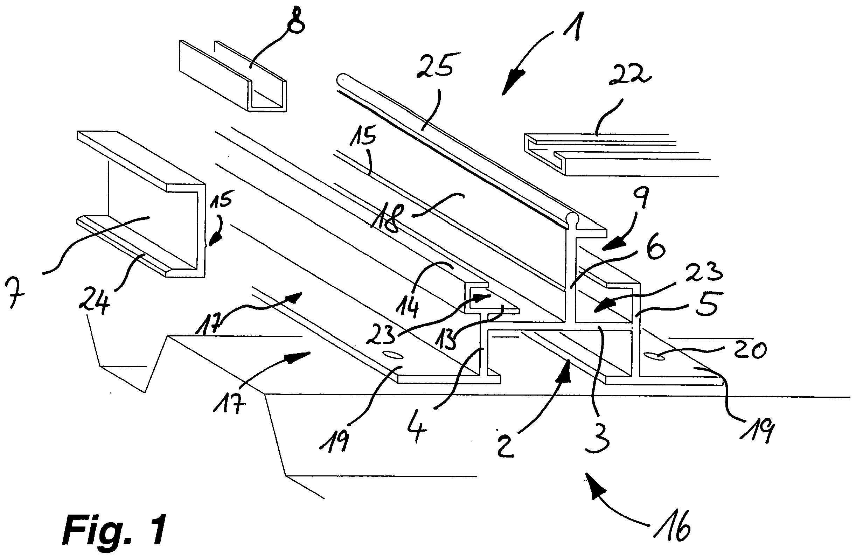

In der Fig.1 sind einzelne Komponenten einer im Ganzen mit 1 bezeichnete Traganordnung zur Anbringung von in dieser Figur der Übersichtlichkeit halber zunächst nicht gezeigten Solarmodulen auf eine ebene oder geneigte Dachfläche 16 als Tragwerkskonstruktion zu erkennen, die im vorliegenden Fall durch ein sogenanntes Trapezdach gebildet ist, an dessen einer in der Fig.1 erkennbarer Hochsicke die Traganordnung 1 befestigt ist. Die Traganordnung 1 kann darüber hinaus noch an weiteren, nicht dargestellten Punkten befestigt sein.

In der Mitte der Fig.1 ist hierbei das Tragprofil 2 der Traganordnung 1 gezeigt. Dieses wird durch eine im wesentlichen parallel zu der Dachfläche angeordnete Querstrebe 3 gebildet an deren für den Betrachter linker Längsseite ein Profilstück 4 und an dessen rechter Längsseite ein L- Profilstück 5 angeordnet ist, wobei jeweils eine Stegfläche der Profilstücke 4, 5 mit der Querstrebe 3 verbunden ist. An dem linken Flansch des Profilstücks 4 ist ein L-Profilstück angeordnet, so dass das Profilstück 4 mit L-Profilstück auch als im wesentlichen vertikaler Steg mit an dessen oberer Randfläche angeordneten C-Profil angesehen werden kann, dessen einer, unterer Schenkel 13 außen mit dem Steg verbunden ist. An der nach oben gewandte Fläche der Querstrebe 3 ist ein weiteres L-Profil 6 so angeordnet, dass dessen Steg 18 von der Dachfläche wegweist. Die Querstrebe 3, die Profilstücke 4, 5 und das L-Profil 6 bilden das Tragprofil 2.

Zur Linken des Tragprofils 2 ist ein als C- oder U-Profil ausgebildetes Profilelement 7 zu erkennen, welches Schenkel gleicher Länge aufweist, während etwas rechts dahinter ein weiteres C- oder U-Profil zu erkennen ist, welches das Klemmstück 8 bildet.

Zur Rechten des Tragprofils 2 ist darüber hinaus ein Stützelement 22 zu erkennen, welches in hier nicht gezeigter Gebrauchsstellung zur Abstützung von Solarmodulen 11, 12 verwendet werden kann und hier als nach oben offenes C-Profil ausgebildet ist, auf deren nach innen weisenden Profilstücken Randbereiche von Solarmodulen 11, 12 abgestützt sein können.

Das Tragprofil 2 der Traganordnung 1 in der Fig.1 kann wenigstens zwei an seinen beiden verschiedenen Längsseiten angeordnete, in der Fig.1 aus Gründen der Übersichtlichkeit nicht dargestellte Solarmodule 11, 12 verbinden. Hierfür ist an dem Tragprofil 2 an der für den Betrachter rechten Längsseite eine Aufnahme 9 vorgesehen, in welche ein freies Ende wenigstens eines ersten Solarmoduls 11 aufgenommen ist. Die Aufnahme 9 ist dabei durch das L-Profilstück 5 und das L-Profil 6 gebildet, zwischen deren Flansche das erwähnte freie Ende des Solarmoduls 11 eingreift und durch indirekte, durch eine Stützelement 22 abgestützte oder direkte flächige Anlage an den Flanschen der Profile 5, 6 sowie der dem Solarmodul stirnseitig zugewandten Stegfläche des L-Profils 6 gehalten ist.

Die Traganordnung 1 weist das in der Fig.1 erkennbare, separates Profilelement 7 auf, welches mit dem Tragprofil 2 in einer Gebrauchsstellung verbindbar ist und mit einem Bereich des Tragprofils, hier dem in Richtung des L-Profils 6 weisenden Flansch des Profilsstücks 4, an dessen für den Betrachter linken Längsseite eine Aufnahme 10 für ein freies Ende eines zweiten Solarmoduls 12 bildet. Während das Solarmodul 12 auf der nach oben gewandten Fläche des oberen Schenkels 14 des C-Profils des Profilstücks 4 aufliegt, kann es von dem Profilelement 7 übergriffen werden, wobei der für den Betrachter untere Schenkel des Profilelements 7 in eine durch die Querstrebe 3 und den dem L-Profil 6 zugewandten, unteren Schenkel 13 des C-Profils des Profilstücks 4 gebildete Ausnehmung den betreffenden Schenkel 13 hintergreifend eingreift. Zur besseren Handhabbarkeit dieses Eingriffs ist das freie Ende des eingreifenden, für den Betrachter unteren Schenkels des Profilelements 7 in einem dem unteren Schenkel 13 des C-Profils des Profilstücks 4 zugewandten Randbereich mit einer Fase 24 versehen. Der Schenkel des Profilelements 7 bildet hierbei mit der Querstrebe 3 und dem Schenkel 13 des C-Profils des Profilstücks 4, insgesamt also mit dem Tragprofil 2 eine formschlüssige Verbindung, wodurch das Solarmodul 12 in der Aufnahme 10 gehalten ist.
Das bereits erwähnte Klemmstück 8 ist als gleichschenkliges U-Profil ausgebildet. Nach Anordnung des Profilelements 7 in seine Gebrauchsstellung, in welcher es das Solarmodul 12 umgreift, kann dieses Klemmstück in die zwischen der Basis des Profilelements 7 und dem Steg des L-Profils 6 gebildete Lücke eingeführt werden und sorgt derart für einen klemmenden Sitz des Profilelements an dem Tragprofil. Hierbei sitzt die Basis des U-profilartigen Klemmstücks vollflächig auf der Querstrebe 3 auf. Etwa in Höhe der Länge der Schenkel des Klemmstücks 8 ist an dem Steg des L-Profils 6 und an der Basis des Profilelements 7 jeweils ein als Rastnase ausgebildetes Rastmittel 15 zu erkennen, mit welchem die nach oben weisende Flächen der Schenkel des Klemmstückes 8 an ihrem Rand verrastet werden, so dass auch das Klemmstück 8 ortsfest gehalten ist.
An seiner der Dachfläche 16 zugewandten Seite ist das Tragprofil 2 der Traganordnung 1 einstückig mit einem Gestell 17 versehen, welches aus an den der Dachfläche zugewandten Enden der Profile 4, 6 angeordneten, parallel zu dem Tragprofil verlaufenen Flanschen 19 besteht, die an der Dachfläche 16 anliegen. Das Gestell 17 selbst ist wiederum durch nicht weiter dargestellte Befestigungsmittel, etwa die an den Flanschen 19 befindlichen, kreisrunden Ausnehmungen 20 durchgreifende Schrauben, Nieten oder dergleichen Befestigungselemente an der Dachkonstruktion anzubringen.

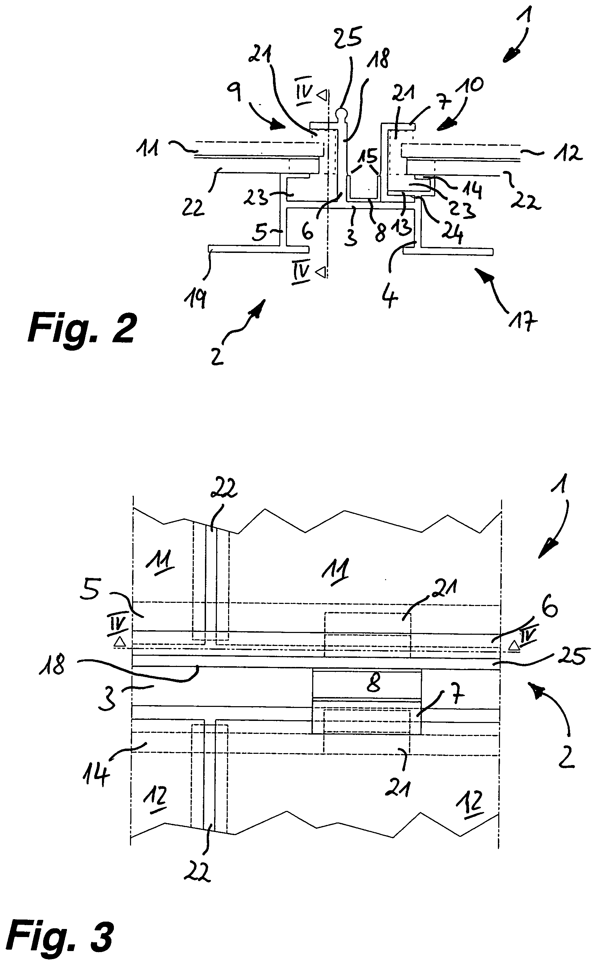

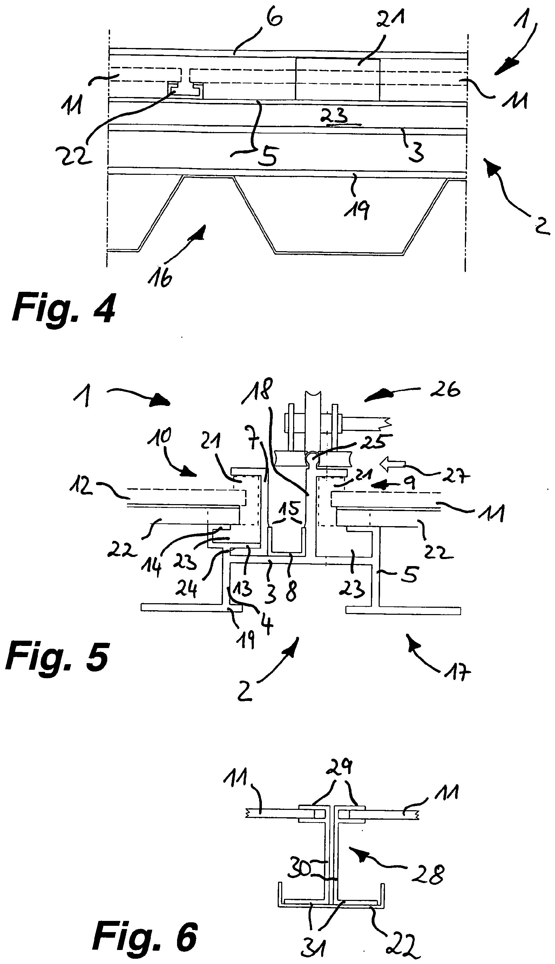

Die Fig.2, 3 und 4 zeigen die erfindungsgemäße Traganordnung 1 mit in Gebrauchsstellung befindlichen, in den Aufnahmen 9, 10 aufgenommenen, laminatartigen Solarmodulen 11, 12 sowie an dem Tragprofil 2 angeordnetem Profilelement 7 und Klemmstück 8, wobei in der Fig.2 dem Betrachter im Unterschied zur Fig.1 die andere Querseite des Tragprofils 2 zugewandt ist und auf eine Darstellung der Dachfläche 16 verzichtet wurde. Weiter ist die Fig.4 im wesentlichen eine Darstellung der Traganordnung 1 aus den Fig.2 und 3, entlang der Schnittlinie IV-IV gesehen, wobei in der Fig.4 aus Gründen der Vollständigkeit die Dachkonstruktion des Trapezdachs, auf welchem die Traganordnung 1 angeordnet ist, zu sehen ist. Die Fig.2 zeigt dabei eine ebene Seitenansicht, während die Fig.3 eine Draufsicht von oben zeigt.

In den Fig.2 bis 4 ist die erfindungsgemäße Traganordnung 1 mit daran angeordneten Solarmodulen 11, 12 zu erkennen, wobei das in der Fig.2 für den Betrachter rechte Solarmodul 12 durch das in seiner Gebrauchsstellung befindliche Profilelement 7 in seiner Position gehalten ist. Durch die Verbindung des Profilelements 7 in seiner Gebrauchsstellung mit dem Tragprofil 2 der Traganordnung 1 ist an letzterer mit einem Bereich des Tragprofils 2, nämlich mit dem oberen Schenkel 14 des C-Profils des Profilstücks 4, an der für den Betrachter rechten Längsseite des Tragprofils 2 eine Aufnahme 10 für ein freies Ende eines zweiten Solarmoduls 12 gebildet. Das Profilelement 7 ist mit dem Abschnitt des Tragprofils 2 einfach durch eine Art Steckvorgang verbindbar, da der betreffende untere Schenkel des Profilelements 7 in Gebrauchsstellung den unteren Schenkel 13 des C-Profils des Profilstücks 4 hintergreift, während gleichzeitig der obere Schenkel des Profilelements 7 das freie Ende des zweiten Solarmoduls 12 umgreift. Der Schenkel des Profilelements 7 greift dabei derart in eine von dem flanschartigen unteren Schenkel 13 des C-Profils des Profilstücks 4 und der Querstrebe 3 gebildete Ausnehmung ein, dass diese zusammen eine formschlüssige Verbindung bilden.

Dieser Eingriff des Schenkels des Profilelements 7 wird überdies dadurch erleichtert, dass an dessen in Gebrauchsstellung der rückwärtigen Schenkelfläche des C-Profils des Profilstücks 4 zugewandten Eckbereich eine Fase 24 vorgesehen ist.

Weiterhin ist den Fig.2 bis 4 zu entnehmen, dass an der für den Betrachter in der Fig.2 linken, ersten Aufnahme 9 durch einen senkrecht von der durch die Traganordnung 1 überdeckten Dachfläche wegweisenden Steg 18, der Teil des L-Profils 6 ist, ein stirnseitiger Anschlag für ein freies Ende des ersten Solarmoduls 11 gebildet ist. Darüber hinaus erkennt man, dass die Ober- und die Unterseite des ersten Solarmoduls 11 an den Flanschflächen zweier verschiedener Teilprofile des Tragprofils 2, nämlich an einem Flansch des L-Profilstücks 5 und an einem Flansch des L-Profils 6, anliegen. Ebenso ist in den Fig.2 bis 4 eine in Verlängerung des Stegs 16, von der überdeckten Dachfläche wegweisend, sich entlang der Längserstreckung des Tragprofils 2 erstreckende Schieneneinrichtung 25 zu erkennen. Die Schieneneinrichtung 25 ist hier an einem von dem Flansch des L-Profils 6 vorspringenden, geraden Verbindungsstück als Rundleiste mit im wesentlichen kreisrundem Querschnitt vorgesehen, an welcher die in den Fig.2 bis 4 nicht dargestellte, zu führende Wagenanordnung 26 eines Servicewagens einhängbar ist.

Den Fig.2 bis 4 ist darüber hinaus zu entnehmen, dass zwischen dem L-Profil 6 und dem ersten Solarmodul 11 sowie zwischen dem Profilelement 7 und dem zweiten Solarmodul 12 ein Halteelement 21 angeordnet ist, welcher die Solarmodule 11, 12 an dem Tragprofil 2 festlegt, da die Solarmodule 11, 12 durch die vorliegend als rechtwinkliges Winkelstück aus Gummi ausgelegten Haltelemente in einem klemmenden Sitz in ihrer Position gehalten sind. Die Halteelemente 21 erstrecken sich hierbei nur über einen kurzen Teil der Längserstreckung eines Solarmoduls 11, 12 und sind im Falle der zweiten Aufnahme 10 auch kürzer als das Profilelement 7 ausgebildet. Die Halteelemente 21 sind in den Fig.2 bis 5 strichliniert dargestellt.

Ebenso zeigen die Fig.2 bis 4 dass bei dieser Ausführung der erfindungsgemäßen Traganordnung 1 entlang der Längserstreckung des Tragprofils 2 an dessen beiden Längsseiten jeweils mindestens zwei Solarmodule 11, 12 angeordnet sind und dass in den Bereichen aneinandergrenzender Solarmodule 11, 12 der gleichen Längsseite des Tragprofils 2 zwischen deren dem Tragprofil 2 zugeordneter Auflagefläche und den Solarmodulen 11, 12 ein im wesentlichen senkrecht zur Längserstreckung des Tragprofils 2 verlaufendes Stützelement 22 angeordnet ist, so dass die Solarmodule 11, 12 nur indirekt auf den ihnen zugewandten Flächen des Tragprofils 2 aufliegen. Die Stützelemente 22 sind dabei als nach oben offenes, C-förmiges Profilstück ausgebildet, auf dessen beiden der Dachfläche abgewandten Flansch- bzw. Stirnflächen seitliche Randbereiche verschiedener Solarmodule 11, 12 der gleichen Längsseite des Tragprofils 2 aufliegen. Darüber hinaus übernehmen die Stützelemente 22 hier die dichtende Funktion zwischen je zwei Solarmodulen 11, 11 und 12, 12.

Schließlich ist den Fig.2 bis 4 auch entnehmbar, dass an dem Tragprofil 2 der Traganordnung 1 durch die die Solarmodule 11, 12 abstützenden Teilprofile des Tragprofils 2 unterhalb zumindest der Aufnahmen 9, 10 bevorzugt jeweils ein sich über die Länge des Tragprofils 2 erstreckender Hohlraum 23 gebildet ist, der flüssige oder rieselfähige über die Moduloberfläche und/oder die Stützelemente 22 zugeleitete Medien in Richtung der Breitseiten des Tragprofils 2 abführt. Dies kann zum Beispiel auf den Solarmodulen auftreffender Regen sein, der entweder direkt an einer Längsseite der Solarmodule 11, 12 über deren Rand in den Hohlraum 13 gelangt oder über die Stützelemente 22, deren Enden oberhalb des Hohlraums 13 liegen bzw. münden, so dass ein Medium, dass an den Breitseiten der Solarmodule 11, 12 in das oben offene Profil eines Stützelements 22 eintritt, an dessen offenen Stößen in den Hohlraum 23 gelangen kann.

Aus den Fig.2 bis 4 ist insbesondere zu erkennen, dass mit der erfindungsgemäßen Traganordnung 1, die das Tragprofil 2 mit dem Profilelement 7, die Solarmodule 11, 12 und die Stützelemente 22 aufweist, für die überdeckte Dachfläche 16 eine dichte Dachhaut gebildet ist.

Der Fig.5 ist die Ansicht einer Traganordnung 1 zu entnehmen, die im wesentlichen derjenigen aus der Fig.2 entspricht, wobei hier wieder die andere Breitseite des Tragprofils 2 zu sehen ist, so dass das erste Solarmodul 11 für den Betrachter rechts und das zweite Solarmodul 12 links angeordnet ist. Im Unterschied zur Fig.2 ist in der Darstellung der Fig.5 die Traganordnung 1 zunächst an einem geneigten Dach angeordnet, was durch den in Richtung eines Gefälles weisenden Pfeil 27 angedeutet ist. Dies entspricht dem Umstand, dass bei Anordnung an einer geneigten Dachfläche bevorzugt die erste Aufnahme 9 des Tragprofils 2 die untere Aufnahme eines bezüglich des zweiten Solarmoduls 12 höher liegenden ersten Solarmoduls 11 bildet. Außerdem ist an der Traganordnung 1 der Fig.5 an der an dem Steg 18 befindlichen Schieneneinrichtung 25 eine Wagenanordnung 26 zu erkennen, die in die Schieneneinrichtung 25 eingehängt einen Servicewagen zur Wartung und Montage der Solarmodule 11, 12 umfasst.

Die Fig.6 zeigt dann eine andere Ausführungsform von der Traganordnung 1 zugeordneten Stützelementen 22, welche die in diesem Fall gerahmten Solarmodule 11, 12 tragen und U-förmig nach oben offen ausgebildet sind. Das dargestellte Stützelement 22 verläuft dabei weiterhin zwischen den Breitseiten zweier Solarmodulen 11, 12, die der gleichen Längsseite des Tragprofils 2 zugeordnet sind. Die Solarmodule 11, 12 sind dabei gerahmt, wobei die Rahmen 28 der Solarmodule 11, 12 im Querschnitt im wesentlichen ein L-Profil bilden, an dessen oberen Stegenden eine U-förmige, quer von dem jeweiligen Steg 30 abstehende Aufnahme 29 angeordnet ist, welche den Rand der Breitseite des Solarmoduls 11, 12 aufnimmt. Die Flansche 31 der Rahmen sind dabei mit ihren dem Stützelement 22 zugewandten Flächen vollflächig auf der Fläche der Basis des U-förmigen Stützelements 22 aufgelagert, während die Stege 30 einander mit ihren rückwärtigen Flächen benachbart gegenüberstehen, wodurch die Aufnahmen 29 voneinander weg auf das ihnen jeweils zugeordnete Solarmodul 11, 12 hin weisen. Die Stege 30 stehen dabei nicht flächig mit ihren rückwärtigen Flächen aneinander, vielmehr ist zwischen den Rahmenprofilen 28 eine Lücke gelassen, damit die Funktion des Abtransports von die Traganordnung 1 beaufschlagenden Medien über die Stützelemente 22 erhalten bleiben kann.

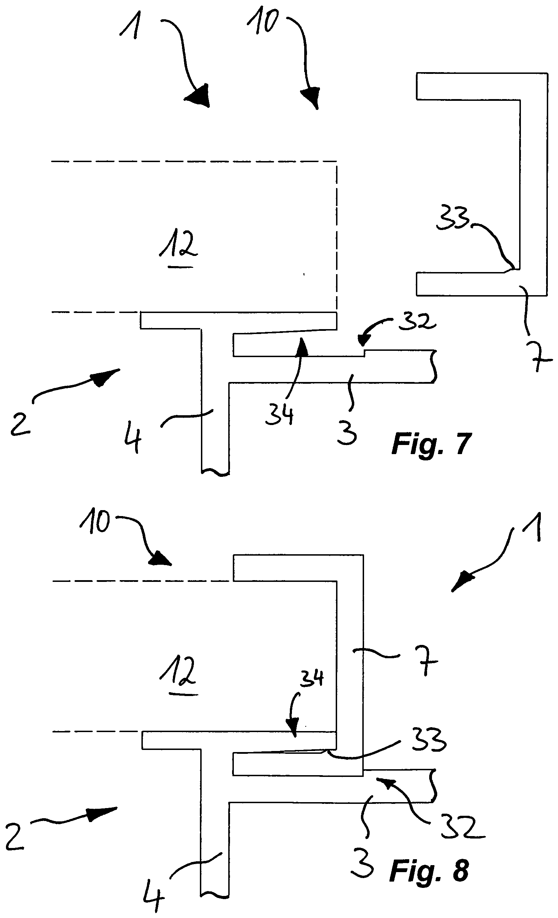

Die Fig.7 und 8 zeigen schließlich einen Detailausschnitt einer Ausführungsform der erfindungsgemäßen Traganordnung 1, bei welcher das Profilelement 7 an dem Tragprofil 2 ohne Zuhilfenahme eines Klemmstücks 8 festgelegt ist. In der Fig. 7 ist dabei das Profilelement vor seiner Festlegung an dem Tragprofil 2, in der Fig.8 nach der Festlegung gezeigt. Einen Abschnitt des Tragprofils 2 bildet das Profilstück 4, welches als T-Profil ausgebildet ist, das eine dem zweiten, strichliniert dargestellten Solarmodul 12 zugewandte Flanschfläche aufweist, auf welcher das freie Ende des Solarmoduls 12 direkt abgestützt spannungsfrei aufliegt. Von dem Steg des Profilstücks 4 steht quer in Richtung der nicht dargestellten ersten Aufnahme 9 die Querstrebe 3 des Tragprofils 2 ab. Von dem Steg des Profilstücks ab nach einer etwas größeren Länge als diejenige des in die gleiche Richtung weisenden Flansches des Profilstücks 2 befindet sich an der Querstrebe 3 ein Vorsprung 32. Der Querschnitt des parallel zu der Querstrebe 3 verlaufenden Flanschs des Profilstücks 4 verjüngt sich mit zunehmendem Abstand von dem Steg des Profilstücks derart, dass die dem Solarmodul 12 abgewandte Fläche des betreffenden Flanschs zurückspringt, der Flansch demnach also einen sich ändernden Querschnitt 34 aufweist. Hierdurch lässt sich der hierfür vorgesehene, für den Betrachter untere Schenkel des Profilelements 7 leicht zwischen den Flansch und die Querstrebe 3 führen. An der Innenseite des betreffenden Schenkels befindet sich im Eckbereich zur Basis des Profilelements 7 ein nach innen weisender Absatz 33, über welchen das Ende des Flanschs in Gebrauchsstellung des Profilelements 7 greift. Von dem Schenkelende kommend ist der Absatz 33 zunächst angeschrägt und verläuft dann bis zur Innenseite der Basis des Profilelements 7 parallel zur geraden Schenkelinnenseite. Die Stirnseite des Flanschs liegt in der Gebrauchsstellung des Profilelements 7 an der Innenseite der Basis des Profilelements 7 an. Derart umgreift dann das Profilelement 4 sowohl den Flansch des Profilstücks 4 als auch das Solarmodul 12. Gleichzeitig verrastet die äußere untere Ecke des Profilelements 4 in dieser Stellung mit dem an der Querstrebe 3 angeordneten Vorsprung 32.

Somit umgreift das U-förmige Profilelement 7 in Gebrauchsstellung das freie Ende des zweiten Solarmoduls 12 und hintergreift dabei mit einem seiner Schenkel einen Flansch des Profilstücks 4. Gleichzeitig bildet der Schenkel des Profilelements 7 mit dem Flansch des Profilstücks 4 sowie einer dem Flansch benachbarten Fläche des Tragprofils 2, hier mit der dem Solarmodul 12 zugewandten Fläche der Querstrebe 3, zumindest bereichsweise eine formschlüssige Verbindung, wobei in Gebrauchsstellung des Profilelements 7 sowohl der Schenkel des Profilelements 7, als auch der betreffende Flansch des Profilstücks 4 selbst einen sich ändernden Querschnitt 24 aufweist. Hierdurch ist ohne ein zusätzliches Klemmstück 8 eine Aufnahme 10 gebildet und das Solarmodul 12 an dem Tragprofil 2 gehalten.

Demnach betrifft die vorstehende Erfindung eine Traganordnung 1 zur Aufbringung von Solarmodulen 11, 12 auf eine ebene oder geneigte Dachkonstruktion, mit einem Tragprofil 2, welches wenigstens zwei an seinen beiden verschiedenen Längsseiten angeordnete Solarmodule 11, 12 verbindet, wobei an dem Tragprofil 2 an dessen einer Längsseite eine Aufnahme 9 vorgesehen ist, in welcher ein freies Ende wenigstens eines ersten Solarmoduls 11 aufgenommen ist. Um eine Traganordnung 1 zur Verfügung zu haben, welche stabil ist und kostengünstig ein einfaches Verbinden mit Solarmodulen 11, 12 und ein ebenso einfaches wieder Lösen der Verbindung der Solarmodule 11, 12 mit der Traganordnung 1 gestattet, wird vorgeschlagen, dass die Traganordnung 1 ein separates Profilelement 7 aufweist, welches mit dem Tragprofil 2 in einer Gebrauchsstellung verbindbar ist und in dieser mit einem Abschnitt des Tragprofils 2 an dessen anderer Längsseite eine Aufnahme 10 für ein freies Ende wenigstens eines zweiten Solarmoduls 12 bildet.

## Patentansprüche

1. Traganordnung (1) zur Anbringung von Solarmodulen an einem Dach, einer Fläche oder dergleichen Tragwerkskonstruktion, mit einem zwei verschiedene Längsseiten aufweisenden Tragprofil (2), über welches wenigstens zwei an seinen beiden verschiedenen Längsseiten anordenbare Solarmodule (11, 12) verbindbar sind, wobei die beiden Solarmodule (11, 12) in einer Ebene anordenbar sind, und wobei an dem Tragprofil (2) an dessen einer Längsseite eine Aufnahme (9) vorgesehen ist, in welcher ein freies Ende wenigstens eines ersten Solarmoduls (11) aufnehmbar ist, wobei die Traganordnung (1) ein separates Profilelement (7) aufweist, welches mit dem Tragprofil (2) in einer Gebrauchsstellung schraubenlos verbindbar ist und in dieser mit einem Abschnitt des Tragprofils (2) an dessen anderer Längsseite eine Aufnahme (10) für ein freies Ende des zweiten (12) der wenigstens zwei Solarmodule (11, 12) bildet und wobei der Abschnitt des Tragprofils (2) als Profilstück (4) vorgesehen ist, welches wenigstens eine dem zweiten Solarmodul (12) zugewandte Flansch- und/oder Schenkelfläche aufweist, auf welcher das freie Ende dieses Solarmoduls (12) direkt oder indirekt abgestützt auflegbar ist, wobei das Profilelement (7) als C- oder U-Profil mit Schenkeln gleicher oder unterschiedlicher Länge vorgesehen ist, welches in Gebrauchsstellung das freie Ende des zweiten Solarmoduls (12) umgreift und dabei mit einem seiner Schenkel einen Flansch des Profilstücks (4) derart hintergreift, dass der Schenkel des Profilelements (7) mit dem Flansch des Profilstücks (4) sowie einer dem Flansch benachbarten Fläche des Tragprofils (2) zumindest bereichsweise eine formschlüssige Verbindung bildet.

2. Traganordnung nach Anspruch 1, **dadurch gekennzeichnet, dass** ein Bereich des in Gebrauchsstellung des Profilelements (7) dem zweiten Solarmodul (12) abgewandten Fläche des Flanschs des Profilstücks (4) zugewandten Schenkels des Profilelements (7) und/oder der betreffende Flansch selbst einen sich ändernden Querschnitt (24, 34), insbesondere eine Fase oder eine Rundung, aufweist.

3. Traganordnung nach einem der vorhergehenden Ansprüche, **dadurch gekennzeichnet, dass** an einer dem Tragprofil (2) zugeordneten, im wesentlichen parallel zu der Dachfläche verlaufenden Querstrebe (3) ein L-Profilstück (6) angeordnet ist, welches einen von der Querstrebe (3) weg weisenden Steg (18) aufweist.

4. Traganordnung nach Anspruch 3, **dadurch gekennzeichnet, dass** zwischen den einander zugewandten Flächen des in Gebrauchsstellung befindlichen Profilelements (7) und des Stegs (18) wenigstens ein das Profilelement (7) festlegendes Klemmstück (8) angeordnet ist.

5. Traganordnung nach Anspruch 3 oder 4, **dadurch gekennzeichnet, dass** an wenigstens einer der in Gebrauchsstellung des Profilelements (7) einander zugewandten Flächen des Stegs (18) des Tragprofils (2) und des Profilelements (7) als Sicherungsmittel ein Klemm-, Rast- und/oder Haltemittel (15) vorgesehen ist, welches das Klemmstück (8) in seiner Gebrauchsstellung hält, wobei das Klemmstück (8) durch wenigstens eine, insbesondere durch je eine sich längs der einander zugewandten Flächen des Stegs (18) des Tragprofils (2) oder/und des Profilelements (7) erstreckende, mit der oder den Stirnseiten der Schenkel des profilartigen Klemmstücks (8) verrastende Rastnase (15) in seiner Gebrauchsstellung gehalten ist.

6. Tragordnung nach einem der vorhergehenden Ansprüche, **dadurch gekennzeichnet, dass** entlang der Längserstreckung des Tragprofils (2) an dessen beiden Längsseiten jeweils mindestens zwei Solarmodule (11, 12) anordenbar sind und dass in den Bereichen aneinandergrenzender Solarmodule (11, 12) der gleichen Längsseite des Tragprofils (2) zwischen deren dem Tragprofil (2) zugeordneter Auflagefläche und den Solarmodulen (11, 12) ein im wesentlichen senkrecht zur Längserstreckung des Tragprofils (2) verlaufendes Stützelement (22) angeordnet ist.

7. Traganordnung nach Anspruch 6, **dadurch gekennzeichnet, dass** das Stützelement (22) als nach oben offenes, insbesondere C- oder U-förmiges Profilstück ausgebildet ist, auf dessen beiden der Dachfläche abgewandten Flansch- bzw. Stirnflächen seitliche Randbereiche verschiedener Solarmodule (11, 12) aufliegen.

8. Traganordnung nach einem der vorhergehenden Ansprüche, **dadurch gekennzeichnet, dass** durch die die Solarmodule (11, 12) abstützenden Teilprofile des Tragprofils (2) unterhalb zumindest einer der Aufnahmen (9, 10), bevorzugt unter beiden Aufnahmen, jeweils ein sich über die Länge des Tragprofils (2) erstreckender Hohlraum (23) gebildet ist, der flüssige oder rieselfähige über die Moduloberfläche und/oder die Stützelemente (22) zugeleitete Medien in Richtung der Breitseiten des Tragprofils (2) derart abführt, dass das Tragprofil (2) mit dem Profilelement (7), den Solarmodulen (11, 12) und den Stützelementen für die überdeckte Dachfläche eine dichte Dachhaut bildet.

9. Traganordnung nach einem der Ansprüche 3 bis 8, **dadurch gekennzeichnet, dass** in Verlängerung des Stegs (18) von der überdeckten Dachfläche wegweisend eine sich entlang des Tragprofils (2) erstreckende Führungseinrichtung (25), insbesondere zur Führung einer beweglichen Wagenanordnung (26), vorgesehen ist.

10. Traganordnung nach einem der vorhergehenden Ansprüche, **dadurch gekennzeichnet, dass** das Tragprofil (2) ckig mit einem Gestell (17) versehen ist, welches mit der Dachkonstruktion verbindbar ist.

11. Traganordnung nach einem der vorhergehenden Ansprüche, **dadurch gekennzeichnet, dass** bei Anordnung an einer geneigten Dachfläche die erste Aufnahme (9) des Tragprofils (2) die untere Aufnahme eines bezüglich des zweiten Solarmoduls (12) höher liegenden ersten Solarmoduls (11) bildet.

## Claims

1. Support assembly (1) for attaching solar modules to a roof, a surface, or a like support structure, having a support profile (2) which has two different longitudinal sides and by way of which at least two solar modules (11, 12) are connectable by way of the two different longitudinal sides of said support profile (2), wherein the two solar modules (11, 12) are disposable in one plane, and wherein a receptacle (9) is provided on the support profile (2) on the one longitudinal side of the latter, a free end of the at least one first solar module (11) being receivable in said receptacle (9), wherein the support assembly (1) has a separate profiled element (7) which in a use position is connectable without screws to the support profile (2) and in said use position conjointly with a portion of the support profile (2) on the other longitudinal side of the latter forms a receptacle (10) for a free end of the second (12) of the at least two solar modules (11, 12), and wherein the portion of the support profile (2) is provided as a profiled piece (4) which has at least one flange face and/or leg face which faces the second solar module (12) and on which the free end of said solar module (12) is able to be placed so as to be directly or indirectly supported, wherein the profiled element (7) is provided as a C-profile or a U-profile having legs of equal or unequal length, said profiled element (7) in the use position encompassing the free end of the second solar module (12) and herein by way of one leg of said profiled element (7) engaging behind a flange of the profiled piece (4) in such a manner that the leg of the profiled element (7) conjointly with the flange of the profiled piece (4) as well as with a face of the support profile (2) that is adjacent to the flange forming at least in portions a form-fitting connection.

2. Support assembly according to Claim 1, **characterized in that** a region of the leg of the profiled element (7), that in the use position of the profiled element (7) faces that face of the flange of the profiled element (7) that faces away from the second solar module (12), and/or the respective flange per se, has a variable cross section (24, 34), in particular a chamfer or a rounded feature.

3. Support assembly according to one of the preceding claims, **characterized in that** an L-profiled piece (6) is disposed on a transverse stay (3) which is assigned to the support profile (2) and which runs substantially parallel with the roof surface, said L-profiled piece (6) having a web (18) that points away from the transverse stay (3).

4. Support assembly according to Claim 3, **characterized in that** at least one clamping piece (8) which fixes the profiled element (7) is disposed between the mutually facing faces of the profiled element (7) located in the use position and of the stay (18).

5. Support assembly according to Claim 3 or 4, **characterized in that** a clamping means, latching means, and/or holding means (15), which holds the clamping piece (8) in the use position thereof is provided as securing means on at least one of the mutually facing faces of the web (18), of the support profile (2), and of the profiled element (7) in the use position of the profiled element (7), wherein the clamping piece (8) in the use position thereof is held by at least one, in particular by in each case one, latching cam (15) that extends along the mutually facing faces of the web (18), of the support profile (2), and/or of the profiled element (7), said latching cam (15) latching to the end side or end sides of the profile-type clamping piece (8).

6. Support assembly according to one of the preceding claims, **characterized in that** at least two solar modules (11, 12) are disposable along the longitudinal extent of the support profile (2) on the two longitudinal sides of the latter, and **in that** a support element (22) which runs substantially perpendicularly to the longitudinal extent of the support profile (2) is disposed in the regions of mutually contiguous solar modules (11, 12) of the same longitudinal side, between that bearing face of said longitudinal side that is assigned to the support profile (2) and the solar modules (11, 12).

7. Support assembly according to Claim 6, **characterized in that** the support element (22) is configured as profiled piece that is open towards the top, in particular as a C-shaped or U-shaped profiled piece, whose lateral peripheral regions have different solar modules (11, 12) bearing on the two flange faces or end faces, respectively, of said profiled piece that face away from the roof surface.

8. Support assembly according to one of the preceding claims, **characterized in that** on account of the part-profiles of the support profile (2) that support the solar module (11, 12), in each case one cavity (23) that extends across the length of the support profile (2) is formed below at least one of the receptacles (9, 10), preferably below both receptacles, said cavity (23) discharging liquid or free-flowing media that is fed across the module surface and/or the support elements (22) in the direction of the broadsides of the support profile (2) in such a manner that the support profile (2) conjointly with the profiled element (7), the solar modules (11, 12), and the support elements forms a tight roof skin for the covered roof surface.

9. Support assembly according to one of Claims 3 to 8, **characterized in that** a guide installation (25), in particular for guiding a movable carriage assembly (26), that extends along the support profile (2) is provided in the extension of the web (18) so as to point away from the covered roof surface.

10. Support assembly according to one of the preceding claims, **characterized in that** the support profile (2) is provided in an integral manner with a frame (17) which is connectable to the roof structure.

11. Support assembly according to one of the preceding claims, **characterized in that** when disposed on an inclined roof surface the first receptacle (9) of the support profile (2) forms the lower receptacle of a first solar module (11) which lies higher in relation to the second solar module (12).

## Revendications

1. Agencement de support (1) pour l'installation de modules solaires sur un toit, une surface ou une construction de support analogue, avec un profilé de support (2) présentant deux côtés longitudinaux différents, par lequel au moins deux modules solaires (11, 12) pouvant être disposés sur ses deux côtés longitudinaux différents peuvent être assemblés, dans lequel les deux modules solaires (11, 12) peuvent être agencés dans un plan, et dans lequel il est prévu sur le profilé de support (2), sur un côté longitudinal de celui-ci, un logement (9) dans lequel une extrémité libre d'au moins un premier module solaire (11) peut être placée, dans lequel l'agencement de support (1) présente un élément de profilé séparé (7), qui peut être assemblé sans vis au profilé de support (2) dans une position d'utilisation et forme dans celle-ci, avec une partie du profilé de support (2) sur l'autre côté longitudinal de celui-ci, un logement (10) pour une extrémité libre du deuxième (12) desdits au moins deux modules solaires (11, 12) et dans lequel la partie du profilé de support (2) est prévue sous forme de portion de profilé (4), qui présente au moins une face d'aile et/ou de branche tournée vers le deuxième module solaire (12) sur laquelle l'extrémité libre de ce module solaire (12) peut être posée en appui direct ou indirect, dans lequel l'élément de profilé (7) est prévu sous forme de profilé en C ou en U avec des branches de longueur identique ou différente, qui en position d'utilisation entoure l'extrémité libre du deuxième module solaire (12) et s'accroche avec une de ses branches derrière une aile de la portion de profilé (4), de telle manière que la branche de l'élément de profilé (7) forme avec l'aile de la portion de profilé (4) ainsi qu'avec une face du profilé de support (2) voisine de l'aile au moins localement un assemblage par emboîtement.

2. Agencement de support selon la revendication 1, **caractérisé en ce qu'**une région de la branche de l'élément de profilé (7) tournée, dans la position d'utilisation de l'élément de profilé (7), vers la face de l'aile de la portion de profilé (4) détournée du deuxième module solaire (12) et/ou l'aile concernée elle-même présente une section transversale qui varie (24, 34), en particulier un chanfrein ou un arrondi.

3. Agencement de support selon l'une quelconque des revendications précédentes, **caractérisé en ce qu'**une portion de profilé en L (6), qui présente une âme (18) partant d'une entretoise transversale (3), est agencée sur l'entretoise transversale (3) associée au profilé de support (2) et orientée essentiellement parallèlement à la surface du toit.

4. Agencement de support selon la revendication 3, **caractérisé en ce qu'**au moins un élément de serrage (8) immobilisant l'élément de profilé (7) est agencé entre les faces tournées l'une vers l'autre de l'élément de profilé (7) se trouvant en position d'utilisation.

5. Agencement de support selon la revendication 3 ou 4, **caractérisé en ce qu'**il est prévu comme moyen de fixation, sur au moins une des faces de l'âme (18) du profilé de support (2) et de l'élément de profilé (7) tournées l'une vers l'autre dans la position d'utilisation de l'élément de profilé (7), un moyen de serrage, d'encliquetage et/ou de maintien (15), qui maintient l'élément de serrage (8) dans sa position d'utilisation, dans lequel l'élément de serrage (8) est maintenu dans sa position d'utilisation par au moins un, en particulier par chaque fois un ergot d'encliquetage (15) s'étendant le long de faces tournées l'une vers l'autre de l'âme (18) du profilé de support (2) et/ou de l'élément de profilé (7), s'encliquetant avec le côté latéral ou les côtés latéraux de la branche de l'élément de serrage en forme de profilé (8).

6. Agencement de support selon l'une quelconque des revendications précédentes, **caractérisé en ce qu'**au moins deux modules solaires (11, 12) peuvent être agencés le long de l'extension longitudinale du profilé de support (2) respectivement sur les deux côtés longitudinaux de celui-ci et **en ce qu'**un élément de soutien (22) orienté essentiellement perpendiculairement à l'extension longitudinale du profilé de support (2) est agencé dans les régions de modules solaires adjacents l'un à l'autre (11, 12) du même côté longitudinal du profilé de support (2) entre la face d'appui de celui-ci associée au profilé de support (2) et les modules solaires (11, 12).

7. Agencement de support selon la revendication 6, **caractérisé en ce que** l'élément de soutien (22) est réalisé sous la forme d'une portion de profilé ouverte vers le haut, en particulier en forme de C ou de U, sur les deux faces d'aile ou de bout, détournées de la face de toit, duquel reposent des régions de bord latérales de différents modules solaires (11, 12).

8. Agencement de support selon l'une quelconque des revendications précédentes, **caractérisé en ce qu'**une cavité (23) s'étendant respectivement sur la longueur du profilé de support (2) est formée par les profilés partiels du profilé de support (2) qui soutiennent les modules solaires (11, 12) en dessous d'au moins un des logements (9, 10), de préférence en dessous des deux logements, cavité qui évacue des milieux liquides ou ruisselants guidés sur la surface des modules et/ou les éléments de soutien (22) en direction des côtés larges du profilé de support (2), de telle manière que le profilé de support (2) forme avec l'élément de profilé (7), les modules solaires (11, 12) et les éléments de soutien une pellicule de toit étanche pour la face de toit recouverte.

9. Agencement de support selon l'une quelconque des revendications 3 à 8, **caractérisé en ce qu'**il est prévu en prolongement de l'âme (18) à l'opposé de la face de toit recouverte un dispositif de guidage (25) s'étendant le long du profilé de support (2), en particulier pour le guidage d'un dispositif de chariot mobile (26).

10. Agencement de support selon l'une quelconque des revendications précédentes, **caractérisé en ce que** le profilé de support (2) est muni d'un seul tenant d'une base (17), qui peut être assemblée à la structure du toit.

11. Agencement de support selon l'une quelconque des revendications précédentes, **caractérisé en ce que** lors de l'agencement sur une face de toit inclinée, le premier logement (9) du profilé de support (2) forme le logement inférieur d'un premier module solaire (11) disposé plus haut que le deuxième module solaire (12).
